# NEUE EUROPÄISCHE PATENTSCHRIFT

(11) **EP 2 225 284 B2**
(45) Veröffentlichungstag und Bekanntmachung des Hinweises auf die Entscheidung über den Einspruch: **05.11.2014**
(45) Hinweis auf die Patenterteilung: 23.11.2011
(21) Anmeldenummer: 08861545.5
(22) Anmeldetag: 08.12.2008
(51) Int. Cl.: C08F 2/01, C08F 2/44

(54) **VERFAHREN ZUR HERSTELLUNG WASSERABSORBIERENDER POLYMERPARTIKEL**
METHOD FOR PRODUCING WATER-ABSORBING POLYMER PARTICLES
PROCÉDÉ DE FABRICATION DE PARTICULES POLYMÈRES ABSORBANT L'EAU

(30) Priorität: 17.12.2007 EP 07123347
(43) Veröffentlichungstag der Anmeldung: 08.09.2010
(73) Patentinhaber: BASF SE, 67056 Ludwigshafen (DE)
(72) Erfinder: FUNK, Rüdiger, 65527 Niedernhausen (DE); WEISMANTEL, Matthias, 63637 Jossgrund (DE); VAN ESBROECK, Dominicus, 210029 Nanjing (CN); MEES, Filip, Lake Jackson TX 77566 (US)
(86) Internationale Anmeldenummer: PCT/EP2008/010388
(87) Internationale Veröffentlichungsnummer: WO 2009/077100

(56) Entgegenhaltungen:
- WO-A-2007/003619
- DE-A1-102005 002 412

## Beschreibung

Die vorliegende Erfindung betrifft ein Verfahren zur Herstellung wasserabsorbierender Polymerpartikel, umfassend die Zugabe eines festen Zusatzstoffes zu einem Polymergel mittels einer Förderschnecke (1), wobei der feste Zusatzstoff und ein Gasvolumenstrom der Förderschnecke (1) mittels eines Zugabekanals (2) zugeführt werden.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden zur Herstellung von Windeln, Tampons, Damenbinden und anderen Hygieneartikeln, aber auch als wasserzurückhaltende Mittel im landwirtschaftlichen Gartenbau verwendet.

In WO 2001/38402 A1 und WO 2003/22896 A1 werden ein Verfahren zur kontinuierlichen Herstellung wasserabsorbierender Polymerpartikel in einem Knetreaktor mit mindestens zwei achsparallelen Wellen offenbart, wobei die Reaktionsmischung in axialer Richtung durch den Knetreaktor transportiert wird.

WO 2007/003619 A1 offenbart eine Vorrichtung zur Zugabe von festen, viskosflüssigen oder in Lösemittel dispergierten Zusatzstoffen in einen Reaktorinnenraum eines Reaktors zur Herstellung wasserabsorbierender Polymerpartikel. Um zu vermeiden, dass mit dem zugeführten Zusatzstoff Sauerstoff in den Reaktionsraum eingetragen wird, kann die Vorrichtung mit einem Inertgas geflutet werden.

Aufgabe der vorliegenden Erfindung war die Bereitstellung eines verbesserten Verfahrens zur Herstellung wasserabsorbierender Polymerpartikel.

Gelöst wurde die Aufgabe durch ein Verfahren zur Herstellung wasserabsorbierender Polymerpartikel durch Polymerisation einer wässrigen Monomerlösung oder - suspension, enthaltend
a) mindestens ein ethylenisch ungesättigtes, säuregruppentragendes Monomer, das zumindest teilweise neutralisiert sein kann,
b) mindestens einen Vernetzer,
c) optional ein oder mehrere mit den unter a) genannten Monomeren copolymerisierbare ethylenisch und/oder allylisch ungesättigte Monomere und
d) optional ein oder mehrere wasserlösliche Polymere,
umfassend die Schritte
i) Lösungspolymerisation in einem Polymerisationsreaktor, wobei im Polymerisationsreaktor ein Polymergel erzeugt wird,
ii) Zugabe mindestens eines festen Zusatzstoffes während und/oder nach der Lösungspolymerisation zum Polymergel mittels mindestens einer Förderschnecke (1), wobei der feste Zusatzstoff der Förderschnecke (1) mittels eines Zugabekanals (2) zugeführt wird, und
iii) Einmischen des festen Zusatzstoffes in das Polymergel,
dadurch gekennzeichnet, dass über den Zugabekanal (2) zusätzlich ein Gasvolumenstrom der Förderschnecke (1) zugeführt wird, so dass die Gasgeschwindigkeit des Gasvolumenstromes im Zugabekanal (2) in Richtung Förderschnecke (1) mindestens 0,05 m/s beträgt und der Taupunkt des Gasvolumenstromes mindestens 20°C unterhalb der niedrigsten Innenwandtemperatur von Förderschnecke (1) und Zugabekanal (2) liegt.

Fig. 1 zeigt eine Förderschnecke (1) mit einem Zugabekanal (2).

Die Gasgeschwindigkeit des Gasvolumenstromes beträgt vorzugsweise von 0,1 bis 1 m/s, besonders bevorzugt von 0,12 bis 0,5 m/s, ganz besonders bevorzugt von 0,15 bis 0,25 m/s. =

Der Taupunkt des Gasvolumenstromes liegt vorzugsweise mindestens 30°C, besonders bevorzugt mindestens 40°C, ganz besonders bevorzugt mindestens 50°C, unterhalb der niedrigsten Innenwandtemperatur von Förderschnecke (1) und Zugabekanal (2), d.h. der Gasvolumenstrom sollte möglichst trocken sein. Der Taupunkt ist die Temperatur bei der der Wasserdampfpartialdruck die Siedelinie von Wasser schneidet.

Die einzusetzende Gasmenge wird durch den Querschnitt des Zugabekanals (2) bestimmt. Beispielsweise beträgt die Gasgeschwindigkeit im Zugabekanal (2) bei einem Querschnitt von 150 mm und einer Gasmenge von 10 bis 15 m³/h von 0,16 bis 0,23 m/s.

Der feste Zusatzstoff kann sowohl in einem zum Einmischen geeigneten Polymerisationsreaktor als auch in einem separaten Apparat, beispielsweise einem Extruder, zudosiert und in das Polymergel eingemischt werden. In einer bevorzugten Ausführungsform der vorliegenden Erfindung wird ein Knetreaktor als Polymerisationsreaktor verwendet und der feste Zusatzstoff mittels der Förderschnecke in den Knetreaktor dosiert.

Der Wassergehalt des Polymergels beträgt beim Einmischen des festen Zusatzstoffes vorzugsweise von 20 bis 80 Gew.-%, besonders bevorzugt von 30 bis 70 Gew.-%, ganz besonders bevorzugt von 40 bis 60 Gew.-%. Der Wassergehalt wird vorzugsweise analog der von der EDANA (European Disposables and Nonwovens Association) empfohlenen Testmethode Nr. WSP 230.2-05 "Moisture content" bestimmt, wobei der Gewichtsverlust als Wassergehalt angenommen wird. Ein zu hoher Wassergehalt führt zu einem erhöhten Energieaufwand bei der anschließenden Trocknung. Ein zu niedriger Wassergehalt führt zu einer zu hohen mechanischen Leistungsaufnahme beim Einmischen und zu einem ungenügenden Mischergebnis.

Das Polymergel hat beim Einmischen vorzugsweise eine Temperatur von 60 bis 110°C, besonders bevorzugt von 70 bis 100°C, ganz besonders bevorzugt von 80 bis 95°C.

Als feste Zusatzstoffe kommen beispielsweise partikuläre anorganische oder organische Feststoffe in Betracht. Geeignete anorganische Feststoffe sind beispielsweise Siliziumdioxid, Aluminiumoxid, Kalziumphosphat, Kalziumsulfat und Tonminerale. Geeignete organische Feststoffe sind beispielsweise Stärke, modifizierte Stärke, Zellulose, modifizierte Zellulose und wasserabsorbierende Polymerpartikel selber.

So werden üblicherweise wasserabsorbierender Polymerpartikel mit einer zu kleinen Partikelgröße während der Herstellung als Unterkorn abgetrennt und in das Herstellverfahren rückgeführt. Derartige wasserabsorbierende Polymerpartikel können auch nachvernetzt oder in anderer Weise nachbehandelt worden sein. Dieses Unterkorn weist beispielsweise eine Partikelgröße von weniger als 300 µm, von weniger als 250 µm, von weniger als 180 µm oder von weniger als 150 µm, auf.

Die Art des Einbaus der Förderschnecke (1) im erfindungsgemäßen Verfahren unterliegt keiner Beschränkung. Vorzugsweise wird die Förderschnecke (1) aber senkrecht eingebaut.

Die Temperatur des Gasvolumenstromes beträgt vorzugsweise von 10 bis 100°C, besonders bevorzugt von 20 bis 80°C, ganz besonders bevorzugt von 30 bis 70°C.

In einer bevorzugten Ausführungsform der vorliegenden Erfindung wird ein Inertgasstrom als Gasvolumenstrom verwendet. Inerte Gase sind Gase, die mit den Bestandteilen der Monomerlösung nicht reagieren können. Geeignete Inertgase sind beispielsweise Stickstoff, Kohlendioxid und Argon.

Als Inertgas wird vorzugsweise Stickstoff, besonders in technischer Qualität, eingesetzt. Technischer Stickstoff enthält üblicherweise mindestens 99,8 Vol.-% Stickstoff und weniger als 0,0005 Vol.-% Sauerstoff.

In einer bevorzugten Ausführungsform der vorliegenden Erfindung sind die Förderschnecke (1) und der Zugabekanal (2) thermisch isoliert und/oder begleitbeheizt.

Das erfindungsgemäße Verfahren ermöglicht eine gleichmäßigere und störungsfreiere Zuführung der festen Zusatzstoffe über den Zugabekanal (2) in die Förderschnecke (1). Der erfindungsgemäße Gaszusatz verhindert die Entstehung trockener, spröder Beläge in der Förderschnecke (1). Die Beläge können zum Stillstand der Förderschnecke (1) führen und lassen sich nur schwer entfernen. Es können auch Teile der Beläge während des Betriebs der Förderschnecke (1) abbrechen und als cremefarbenen Stippen in das Polymergel gelangen.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser. Idealerweise sind die Monomere a) in jedem Verhältnis mit Wasser mischbar.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 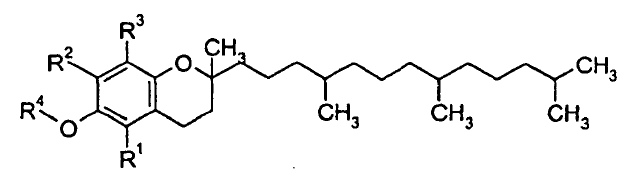 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 530 438 A1 beschrieben, Di- und Triacrylate, wie in EP 547 847 A1, EP 559 476 A1. EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 100 und 1000 aufweist, beispielsweise Polyethylenglykol-400-diacrylat.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins.

Die Menge an Vernetzer b) beträgt vorzugsweise 0,05 bis 1,5 Gew.%, besonders bevorzugt 0,1 bis 1 Gew.-%, ganz besonders bevorzugt 0,3 bis 0,6 Gew.-%, jeweils bezogen auf Monomer a).

Mit den ethylenisch ungesättigten, säuregruppentragenden Monomeren a) copolymerisierbare ethylenisch ungesättigte Monomere c) sind beispielsweise Acrylamid, Methacrylamid, Crotonsäureamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere d) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Die Herstellung eines geeigneten Polymers sowie weitere geeignete hydrophile ethylenisch ungesättigte Monomere a) werden in DE 199 41 423 A1, EP 686 650 A1, WO 2001/45758 A1 und WO 2003/104300 A1 beschrieben.

Geeignete Reaktoren sind Knetreaktoren oder Bandreaktoren. Im Kneter wird das bei der Polymerisation einer wässrigen Monomerlösung oder -suspension entstehende Polymergel durch beispielsweise gegenläufige Rührwellen kontinuierlich zerkleinert, wie in WO 2001/38402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Fleischwolf, Extruder oder Kneter.

Die Säuregruppen der erhaltenen Hydrogele sind üblicherweise teilweise neutralisiert, vorzugsweise zu 25 bis 95 mol-%, bevorzugt zu 50 bis 80 mol%, besonders bevorzugt zu 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen.

Die Neutralisation wird vorzugsweise auf der Stufe der Monomeren durchgeführt. Dies geschieht üblicherweise durch Einmischung des Neutralisationsmittels als wässrige Lösung, als Schmelze, oder bevorzugt auch als Feststoff. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Es ist aber auch möglich die Neutralisation nach der Polymerisation auf der Stufe des Hydrogels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Wird das Hydrogel zumindest teilweise nach der Polymerisation neutralisiert, so wird das Hydrogel vorzugsweise mechanisch zerkleinert, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden.

Das Hydrogel wird dann vorzugsweise mit einem Bandtrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. WSP 230.2-05 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß um so einfacher und das Produkt um so weißer, wenn der Feststoffgehalt des Gels möglichst hoch ist. Bevorzugt liegt der Feststoffgehalt des Gels vor der Trocknung daher zwischen 25 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern.

Das getrocknete Hydrogel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen eingesetzt werden können.

Die mittlere Partikelgröße der als Produktfraktion abgetrennten Polymerpartikel beträgt vorzugsweise mindestens 200 µm, besonders bevorzugt von 250 bis 600 µm, ganz besonders von 300 bis 500 µm. Die mittlere Partikelgröße der Produktfraktion kann mittels der von der EDANA (European Disposables and Nonwovens Association) empfohlenen Testmethode Nr. WSP 220.2-05 "Partikel size distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von vorzugsweise mindestens 150 µm, besonders bevorzugt mindestens 200 µm, ganz besonders bevorzugt mindestens 250 µm, beträgt vorzugsweise mindestens 90 Gew.-%, besonders bevorzugt mindesten 95 Gew.-%, ganz besonders bevorzugt mindestens 98 Gew.-%.

Der Anteil an Partikeln mit einer Partikelgröße von vorzugsweise höchstens 850 µm, besonders bevorzugt höchstens 700 µm, ganz besonders bevorzugt höchstens 600 µm, beträgt vorzugsweise mindestens 90 Gew.-%, besonders bevorzugt mindesten 95 Gew.-%, ganz besonders bevorzugt mindestens 98 Gew.-%.

Die Polymerpartikel können zur weiteren Verbesserung der Eigenschaften nachvernetzt werden. Geeignete Nachvernetzer sind Verbindungen, die Gruppen enthalten, die mit mindestens zwei Carboxylatgruppen der Polymerpartikel kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Nachvernetzer beschrieben.

Weiterhin können auch Nachvernetzer eingesetzt werden, die zusätzliche polymerisierbare ethylenisch ungesättigte Gruppen enthalten, wie in DE 37 13 601 A1 beschrieben

Die Menge an Nachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf das Polymer.

In einer bevorzugten Ausführungsform der vorliegenden Erfindung werden vor, während oder nach der Nachvernetzung zusätzlich zu den Nachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind beispielsweise Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.%, vorzugsweise 0,005 bis 1 Gew.-%, besonders bevorzugt 0,02 bis 0,8 Gew.-%. jeweils bezogen auf das Polymer.

Die Nachvernetzung wird üblicherweise so durchgeführt, dass eine Lösung des Nachvernetzers auf das Hydrogel oder die trockenen Polymerpartikel aufgesprüht wird. Im Anschluss an das Aufsprühen werden die mit dem Nachvernetzer beschichteten Polymerpartikel thermisch getrocknet, wobei die Nachvernetzungsreaktion sowohl vor als auch während der Trocknung stattfinden kann.

Das Aufsprühen einer Lösung des Nachvernetzers wird vorzugsweise in Mischern mit bewegten Mischwerkzeugen, wie Schneckenmischer, Scheibenmischer, Pflugscharmischer und Schaufelmischer, durchgeführt werden. Besonders bevorzugt sind Horizontalmischer, wie Pflugscharmischer und Schaufelmischer, ganz besonders bevorzugt sind Vertikalmischer. Geeignete Mischer sind beispielsweise Lödige-Mischer, Bepex-Mischer, Nauta-Mischer, Processall-Mischer und Schugi-Mischer.

Die Nachvernetzer werden typischerweise als wässrige Lösung eingesetzt. Über den Zusatz an nichtwässrigem Lösungsmittel kann die Eindringtiefe des Nachvernetzers in die Polymerpartikel eingestellt werden.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Anschließend kann das nachvernetzte Polymer erneut klassiert werden.

Die nachvernetzten Polymerpartikel können zur weiteren Verbesserung der Eigenschaften beschichtet oder nachbefeuchtet werden. Geeignete Beschichtungen zur Verbesserung des Akquisitionsverhaltens sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span@ 20.

Die gemäß dem erfindungsgemäßen Verfahren erhältlichen wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g. Die Zentrifugenretentionskapazität wird gemäß der von der EDANA (European Disposables and Nonwovens Association) empfohlenen Testmethode Nr. WSP 241.2-05 "Centrifuge retention capacity" bestimmt.

## Patentansprüche

1. Verfahren zur Herstellung wasserabsorbierender Polymerpartikel durch Polymerisation einer wässrigen Monomerlösung oder-suspension, enthaltend
a) mindestens ein ethylenisch ungesättigtes, säuregruppentragendes Monomer, das zumindest teilweise neutralisiert sein kann,
b) mindestens einen Vernetzer,
c) optional ein oder mehrere mit den unter a) genannten Monomeren copolymerisierbare ethylenisch und/oder allylisch ungesättigte Monomere und
d) optional ein oder mehrere wasserlösliche Polymere,
umfassend die Schritte
i) Lösungspolymerisation in einem Polymerisationsreaktor, wobei im Polymerisationsreaktorein Polymergel erzeugt wird,
ii) Zugabe mindestens eines festen Zusatzstoffes während und/oder nach der Lösungspolymerisation zum Polymergel mittels mindestens einer Förderschnecke (1), wobei der feste Zusatzstoff der Förderschnecke (1) mittels eines Zugabekanals (2) zugeführt wird, und
iii) Einmischen des festen Zusatzstoffes in das Polymergel,
**dadurch gekennzeichnet, dass** über den Zugabekanal (2) zusätzlich ein Gasvolumenstrom der Förderschnecke (1) zugeführt wird, so dass die Gasgeschwindigkeit des Gasvolumenstromes im Zugabekanal (2) in Richtung Förderschnecke (1) mindestens 0,05 m/s beträgt, der Taupunkt des Gasvolumenstromes mindestens 20°C unterhalb der niedrigsten Innenwandtemperatur von Förderschnecke (1) und Zugabekanal (2) liegt und der Taupunkt die Temperatur ist, bei der der Wasserdampfpartialdruck die Siedelinie von Wasser schneidet.

2. Verfahren gemäß Anspruch 1, **dadurch gekennzeichnet, dass** der Polymerisationsreaktor ein Knetreaktor ist und dass der feste Zusatzstoff im Knetreaktor in das Polymergel eingemischt wird.

3. Verfahren gemäß Anspruch 1 oder 2, **dadurch gekennzeichnet, dass** der Wassergehalt des Polymergels beim Einmischen mindestens 20 Gew.-% beträgt.

4. Verfahren gemäß einem der Ansprüche 1 bis 3, **dadurch gekennzeichnet, dass** das Polymergel beim Einmischen eine Temperatur von mindestens 60°C aufweist.

5. Verfahren gemäß einem der Ansprüche 1 bis 4, **dadurch gekennzeichnet, dass** wasserabsorbierende Polymerpartikel mit einer Partikelgröße von weniger als 300 µm als fester Zusatzstoff eingesetzt werden.

6. Verfahren gemäß einem der Ansprüche 1 bis 5, **dadurch gekennzeichnet, dass** die Förderschnecke (1) senkrecht eingebaut ist.

7. Verfahren gemäß einem der Ansprüche 1 bis 6, **dadurch gekennzeichnet, dass** das Gas ein Inertgas ist.

8. Verfahren gemäß Anspruch 7, **dadurch gekennzeichnet, dass** das Inertgas Stickstoff ist.

9. Verfahren gemäß einem der Ansprüche 1 bis 8, **dadurch gekennzeichnet, dass** die Förderschnecke (1) und der Zugabekanal (2) thermisch isoliert und/oder begleitbeheizt sind.

10. Verfahren gemäß einem der Ansprüche 1 bis 9, **dadurch gekennzeichnet, dass** die wasserabsorbierenden Polymerpartikel eine Zentrifugenretentionskapazität von mindestens 15 g/g aufweisen.

## Claims

1. A process for producing water-absorbing polymer particles by polymerizing an aqueous monomer solution or suspension comprising
a) at least one ethylenically unsaturated monomer which bears acid groups and may be at least partly neutralized,
b) at least one crosslinker,
c) optionally one or more ethylenically and/or allylically unsaturated monomers copolymerizable with the monomers mentioned under a) and
d) optionally one or more water-soluble polymers,
comprising the steps of
i) solution polymerization in a polymerization reactor to obtain a polymer gel in the polymerization reactor,
ii) addition of at least one solid additive during and/or after the solution polymerization to the polymer gel by means of at least one conveying screw (1), the solid additive being fed to the conveying screw (1) by means of an addition channel (2), and
iii) mixing the solid additive into the polymer gel,
wherein a gas volume flow is additionally fed via the addition channel (2) to the conveying screw (1), such that the gas velocity of the gas volume flow in the addition channel (2) in the direction of the conveying screw (1) is at least 0.05 m/s, the dew point of the gas volume flow is at least 20°C below the lowest inner wall temperature of conveying screw (1) and addition channel (2) and the dew point is the temperature at which the partial water vapor pressure intersects with the boiling line of water.

2. The process according to claim 1, wherein the polymerization reactor is a kneading reactor and the solid additive is mixed into the polymer gel in the kneading reactor.

3. The process according to claim 1 or 2, wherein the water content of the polymer gel in the course of mixing is at least 20% by weight.

4. The process according to any of claims 1 to 3, wherein the polymer gel has a temperature of at least 60°C in the course of mixing.

5. The process according to any of claims 1 to 4, wherein water-absorbing polymer particles with a particle size of less than 300 µm are used as the solid additive.

6. The process according to any of claims 1 to 5, wherein the conveying screw (1) is installed vertically.

7. The process according to any of claims 1 to 6, wherein the gas is an inert gas.

8. The process according to claim 7, wherein the inert gas is nitrogen.

9. The process according to any of claims 1 to 8, wherein the conveying screw (1) and the addition channel (2) are thermally insulated and/or trace-heated.

10. The process according to any of claims 1 to 9, wherein the water-absorbing polymer particles have a centrifuge retention capacity of at least 15 g/g.

## Revendications

1. Procédé de fabrication de particules polymères absorbant l'eau par polymérisation d'une solution ou suspension aqueuse de monomères, contenant
a) au moins un monomère éthyléniquement insaturé portant des groupes acides qui peut être neutralisé au moins partiellement,
b) au moins un agent de réticulation,
c) éventuellement un ou plusieurs monomères éthyléniquement et/ou allyliquement insaturés copolymérisables avec les monomères cités en a), et
d) éventuellement un ou plusieurs polymères solubles dans l'eau,
comprenant les étapes suivantes
i) la polymérisation en solution dans un réacteur de polymérisation, un gel polymère étant formé dans le réacteur de polymérisation,
ii) l'ajout d'au moins un additif solide pendant et/ou après la polymérisation en solution du gel polymère par au moins une vis transporteuse (1), l'additif solide étant introduit dans la vis transporteuse (1) par un canal d'ajout (2), et
iii) l'incorporation de l'additif solide dans le gel polymère,
**caractérisé en ce qu'**un courant volumique gazeux est également introduit dans la vis transporteuse (1) par le canal d'ajout (2) de manière à ce que la vitesse de gaz du courant volumique gazeux dans le canal d'ajout (2) dans la direction de la vis transporteuse (1) soit d'au moins 0,05 m/s, le point de condensation du courant volumique gazeux est au moins inférieur de 20 °C à la température de paroi intérieure la plus basse de la vis transporteuse (1) et du canal d'ajout (2), et le point de condensation est la température à laquelle la pression partielle de vapeur d'eau coupe la courbe d'ébullition de l'eau.

2. Procédé selon la revendication 1, **caractérisé en ce que** le réacteur de polymérisation est un réacteur à malaxage et **en ce que** l'additif solide est incorporé dans le gel polymère dans le réacteur à malaxage.

3. Procédé selon la revendication 1 ou 2, **caractérisé en ce que** la teneur en eau du gel polymère lors de l'incorporation est d'au moins 20 % en poids.

4. Procédé selon l'une quelconque des revendications 1 à 3, **caractérisé en ce que** le gel polymère présente lors de l'incorporation une température d'au moins 60 °C.

5. Procédé selon l'une quelconque des revendications 1 à 4, **caractérisé en ce que** des particules polymères absorbant l'eau ayant une taille de particule inférieure à 300 µm sont utilisées en tant qu'additif solide.

6. Procédé selon l'une quelconque des revendications 1 à 5, **caractérisé en ce que** la vis transporteuse (1) est montée perpendiculairement.

7. Procédé selon l'une quelconque des revendications 1 à 6, **caractérisé en ce que** le gaz est un gaz inerte.

8. Procédé selon la revendication 7, **caractérisé en ce que** le gaz inerte est l'azote.

9. Procédé selon l'une quelconque des revendications 1 à 8, **caractérisé en ce que** la vis transporteuse (1) et le canal d'ajout (2) sont isolés thermiquement et/ou chauffés par traçage électrique.

10. Procédé selon l'une quelconque des revendications 1 à 9, **caractérisé en ce que** les particules polymères absorbant l'eau présentent une capacité de rétention centrifuge d'au moins 15 g/g.
